# EUROPEAN PATENT SPECIFICATION

(11) **EP 2 216 388 B1**
(45) Date of publication and mention of the grant of the patent: **01.01.2014**
(21) Application number: 08848093.4
(22) Date of filing: 06.11.2008
(51) Int. Cl.: F16J 9/26, C10N 10/12, C10N 30/06

(54) **SLIDE STRUCTURE**
GLEITSTRUKTUR
STRUCTURE DE GLISSOIR

(30) Priority: 06.11.2007 JP 2007288565
(43) Date of publication of application: 11.08.2010
(73) Proprietor: TOYOTA JIDOSHA KABUSHIKI KAISHA, Toyota-shi, Aichi-ken, 471-8571 (JP)
(72) Inventor: SUZUKI, Hideyuki, Toyota-shi Aichi 471-8571 (JP); SHINYOSHI, Takatoshi, Toyota-shi Aichi 471-8571 (JP)
(74) Representative: Jackson, Martin Peter
(86) International application number: PCT/JP2008/070161
(87) International publication number: WO 2009/060879

(56) References cited:
- WO-A1-2005/014763
- JP-A- 2004 245 054
- JP-A- 2004 245 242
- JP-A- 2004 339 486
- JP-A- 2005 060 416
- JP-A- 2007 099 947
- JP-A- 2008 195 903
- JP-A- 2008 255 160
- US-A1- 2005 119 136
- HOLMBERG ET AL: "A concept for friction mechanisms of coated surfaces", SURFACE AND COATINGS TECHNOLOGY, ELSEVIER, AMSTERDAM, NL, vol. 56, no. 1, 18 December 1992 (1992-12-18), pages 1-10, XP025725211, ISSN: 0257-8972, DOI: 10.1016/0257-8972(92)90189-H [retrieved on 1992-12-18]
- NEVILLE ET AL: "Compatibility between tribological surfaces and lubricant additives-How friction and wear reduction can be controlled by surface/lube synergies", TRIBOLOGY INTERNATIONAL, BUTTERWORTH SCIENTIFIC LDT, GUILDFORD, GB, vol. 40, no. 10-12, 28 August 2007 (2007-08-28), pages 1680-1695, XP022218098, ISSN: 0301-679X, DOI: 10.1016/J.TRIBOINT.2007.01.019
- 'Preprints of Meeting on Automotive Engineers, 23 May, 2007 (23.05.07)', article TAKATOSHI SHIN'YOSHI ET AL.: 'Mo-DTC o Fukunda Yuchu ni Okeru DLC Maku no Mamo Kaiseki', pages 5 - 8
- TAKATOSHI SHIN'YOSHI ET AL.: 'Mo-DTC Tenka Yuchu ni Okeru DLC Maku no Mamo Kaiseki' JAPANESE SOCIETY OF TRIBOLOGISTS TORAIBOROJI KAIGI YOKOSHU vol. 2007-9, 10 September 2007, pages 429 - 430

## Description

### TECHNICAL FIELD

The present invention relates to a slide structure including a pair of slide members in which an amorphous carbon film is formed at a sliding surface of, of the pair of slide members that slide relative to each other, one slide member, and more particularly to a slide structure including a lubricant containing an organic molybdenum compound between the pair of slide members.

### BACKGROUND ART

In recent years, conserving resources, reducing environmental pollution, and preventing global warming have received much attention in various countries, and, in particular, improving emission regulations has become an issue in the automobile industry as well. As a means for solving this issue, development of technologies catering to better fuel economy is being pursued. In particular, improving the sliding characteristics of a slide member constituting an engine or of a slide member of a valve train is linked directly to a reduction in energy loss and to better fuel economy for automobiles.

For example, in order to improve the wear resistance of such a slide member while also attaining low friction characteristics, there is a technique in which a coating is applied to the sliding surface of the slide member. For the material of this coating, such amorphous carbon materials as diamond-like carbon (DLC) and the like are coming into use. A film formed of such an amorphous carbon material (amorphous carbon film) is a hard film chiefly comprising carbon, and is a film that is capable of simultaneously attaining low sliding resistance and high wear resistance.

As an example of a slide structure of conventional art, there is proposed a slide structure comprising: a pair of slide members in which a DLC film (amorphous carbon film) is formed on the surface of, of the pair of slide members that slide relative to each other, a substrate of one slide member; and a lubricant between the pair of slide members, the lubricant containing molybdenum dialkyldithiocarbamate (Mo-DTC) as an organic molybdenum compound, wherein a film comprising aluminum or an aluminum alloy is formed at the sliding surface of the other slide member (see Patent Literature 1, for example).
Patent Literature 1: Japanese Patent Publication (Kokai) No. 2005-65881 A

US 2005/0119136 discloses a slide structure according to the precharacterising portion of claim 1 appended hereto.

### DISCLOSURE OF THE INVENTION

### TECHNICAL PROBLEM

From the results of research by the inventors, it has been identified that the amorphous carbon material of the amorphous carbon film formed on the slide member has poor compatibility with respect to such lubricants as, for example, commercialized engine oils containing an organic molybdenum compound and the like. The inventors have ascertained that this, as will be described later, is due to the fact that under the harsh lubrication environments of engine components and the like, sliding surfaces reach high temperatures due to the frictional heat from sliding and the like, and under such high temperature conditions, molybdenum trioxide is produced from organic molybdenum compounds.

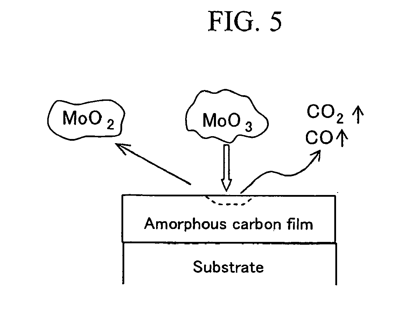

Specifically, as shown in Figure 5, the produced molybdenum trioxide (MoO₃) reacts with the amorphous carbon material (DLC) to become molybdenum dioxide (MoO₂), thereby accelerating decomposition of the amorphous carbon material while producing carbon dioxide (CO₂) or carbon monoxide (CO). The amorphous carbon film whose decomposition has thus been accelerated by molybdenum trioxide causes a drop in strength and an increase in wear. Therefore, as compared to a case in which a lubricant that does not contain Mo-DTC is used, wear of the amorphous carbon film becomes greater.

For example, in the slide structure of the aforementioned Patent Literature 1, the surface of the aluminum contains aluminum oxide (Al₂O₃). If such a slide structure were to be used under the harsh lubrication environments of engine components and the like, Mo-DTC would react with aluminum oxide to produce molybdenum trioxide, thereby decomposing the amorphous carbon film under high temperature conditions. As a result, the wear resistance of the amorphous carbon films that coat the sliding surfaces of engine components would become insufficient.

The present invention is made in view of such problems, and its object lies in the provision of a slide structure that demonstrates, even in cases where a lubricant containing an organic molybdenum compound is used on an amorphous carbon film, a friction coefficient reducing effect by the organic molybdenum compound while also reliably suppressing wear of the amorphous carbon film caused by chemical reactions between the amorphous carbon film and the organic molybdenum compound.

### SOLUTION TO PROBLEM

Through extensive experimentation and research with a view to solving the problems mentioned above, the present inventors have identified, as discussed above, that molybdenum trioxide, which accelerates wear of amorphous carbon materials, is produced through a reaction between the oxygen element contained in the sliding surface of the slide member on the other side and which slides relative to the slide member on which the amorphous carbon film is formed and the molybdenum element in the organic molybdenum compound.

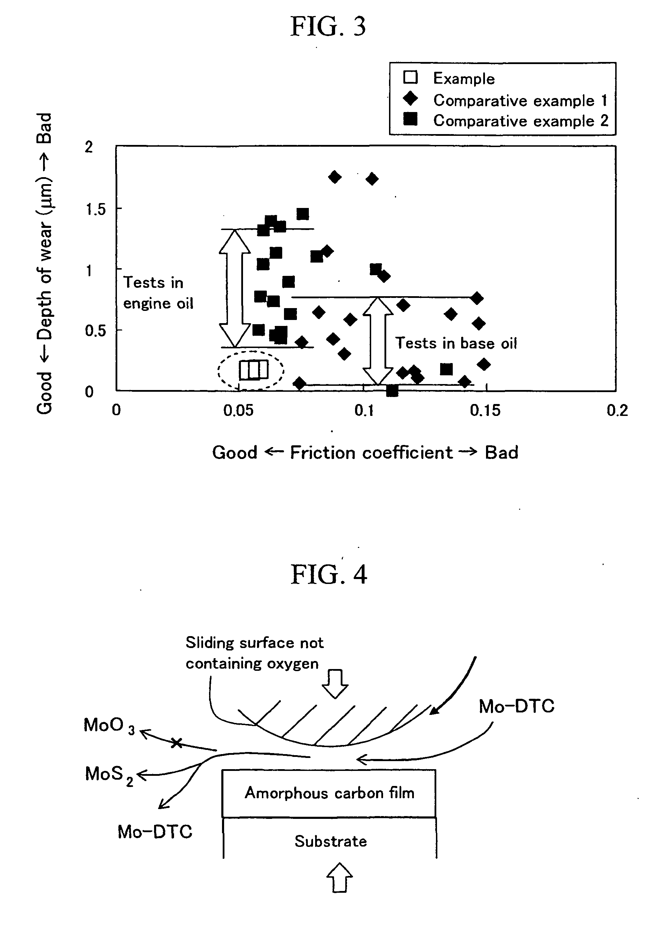

Through further experimentation and research, the present inventors have gained new insight into the fact that when the slide member on the other side which slides relative to the slide member on which the amorphous carbon film is formed simply comprises an alloy material of iron, aluminum or the like, because a film containing the oxygen element is formed at the sliding surface of the slide member, the production of the aforementioned molybdenum trioxide through the aforementioned reaction is inevitable, and that in order to circumvent the production of molybdenum trioxide, it is important that there be formed a sliding surface that does not contain the oxygen element at all. Consequently, as shown in Figure 4, the present inventors have gained new insight into the fact that while organic molybdenum compounds such as Mo-DTC and the like may turn into molybdenum disulfide (MoS₂) due to the heat from sliding, molybdenum trioxide (MoO₃) will no longer be produced, and wear of the amorphous carbon film caused by molybdenum trioxide can thus be prevented.

The present invention is based on the above-mentioned new insights that the present inventors have gained. The present invention provides a slide structure according to claim 1 appended hereto.

According to the present invention, since a hard film that does not contain the oxygen element is formed at the sliding surface of the other slide member that slides relative to the one slide member on which the amorphous carbon film is formed, when these slide members slide relative to each other, molybdenum trioxide is less likely to be produced by the molybdenum element contained in the organic molybdenum compound. Consequently, decomposition of the amorphous carbon material by molybdenum trioxide is suppressed and wear of the amorphous carbon film is reduced, thereby providing for a longer life for the slide structure.

The term "pair of slide members that slide relative to each other" as used with respect to the present invention refers to slide members wherein at least one slide member slides relative to the other slide member, and the term relative sliding refers to the act of sliding by a linear motion, a rotary motion, or a combination of these motions.

Further, a hard film according to the present invention is a film having a surface hardness that is comparable to or greater than the substrate on which the hard film is formed. By making it have such a surface hardness, it is possible to reduce wear of the other slide member.

The amorphous carbon film formed at the sliding surface of the one slide member is a film comprising so-called DLC (diamond-like carbon) (a DLC film), and the amorphous carbon film may be formed by physical vapor deposition (PVD) methods that utilize sputtering, vacuum deposition, ionized deposition, ion plating or the like, by chemical vapor deposition (CVD) methods that utilize plasma treatment or the like, or by methods that combine these methods. In addition, the amorphous carbon film may also contain such added elements as Si, Cr, Mo, Fe, W and the like, and by adding such elements, it is also possible to adjust the surface hardness of the film.

Further, the surface hardness of the amorphous carbon film of the slide member should preferably fall within the range of Hv1000 to Hv4000. When it is below Hv1000, the amorphous carbon film is prone to wear, whereas when it is above Hv4000, the adhesive strength between the amorphous carbon film and the substrate of the slide member drops. In addition, the film thickness of the film of the slide member should preferably be 0.1 µm or greater. When it is less than this film thickness, the film wears rapidly during sliding, and desired effects cannot be attained. Further, in order to improve adhesion of the amorphous carbon film, there may be formed between the substrate and the amorphous carbon film an intermediate layer comprising one or more metal elements selected from Ta, Ti, Cr, Al, Mg, W, V, Nb, and Mo.

On the other hand, for the hard film formed on the other slide member of a slide structure according to the present invention, possible methods include forming at the sliding surface thereof a film of a material that does not contain the oxygen element by plating, thermal spraying, deposition, or the like, and as long as a hard film that does not contain the oxygen element can be obtained, the method of forming the hard film is not limited in particular. In addition, so long as it does not contain the oxygen element and is not prone to oxidation by air and the like over time, its material is not limited to metals, non-metals, and the like, but it is preferable that the hard film be a ceramic film.

According to the present invention, by employing a ceramic film that does not contain the oxygen element, further improvements in the wear resistance of the other slide member may be expected. In addition, because ceramic films have favorable heat resistance, are chemically stable, and are not prone to oxidation by reaction with air over time under ordinary sliding conditions, it is possible to ensure a stable sliding state. Further, even if an iron-based material or an aluminum-based material were selected for the substrate of the hard film, a ceramic film would not peel off from the substrate during sliding, and it is easy to ensure adhesion strength.

While such a ceramic film may be formed by thermal spraying or the like, preferred forming methods include physical vapor deposition (PVD) methods that utilize sputtering, vacuum deposition, ionized deposition, ion plating or the like, chemical vapor deposition (CVD) methods that utilize plasma treatment or the like, methods that combine these methods, and the like.

Examples of such a ceramic film may include, for example, TiN, TiAlN, CrN, TiCN, WC and the like. While it is not limited in particular as long as it is a solid material comprising an inorganic non-metallic substance, the hard film should preferably comprise a nitride compound or a carbide compound.

According to the present invention, by employing a nitride compound or a carbide compound for the hard film, it is possible to obtain a film that does not contain oxygen, and a film comprising such compounds is easy to form on a substrate comprising a steel-based material. In addition, examples of the aforementioned nitride compound may include, for example, aluminum nitride (AlN), chromium nitride (CrN, Cr₂N), silicon nitride (Si₃N₄), boron nitride (BN), titanium nitride (TiN) and the like. Examples of the carbide compound may include, for example, aluminum carbide (Al₄C₃), silicon carbide (SiC), boron carbide (B₄C), titanium carbide (TiC) and the like. Its kind is not limited in particular as long as it does not contain the oxygen element, contains the nitrogen element or the carbon element, and is of a surface hardness that is comparable to or greater than the surface hardness of the substrate to be coated.

Further, it is preferable that the hard film of a slide structure according to the present invention comprise titanium carbide. According to the present invention, a hard film comprising titanium carbide has favorable compatibility with the amorphous carbon film as well, is also superior in wear resistance, and is thus capable of further improving the sliding characteristics of the slide structure.

In addition, it is preferable that both the substrate on which the amorphous carbon film is to be formed and the substrate on which the hard film is to be formed be steel-based materials. Not only do such steel-based materials have broad utility, but adhesion would be readily ensurable for all of the above-mentioned films, and the surface hardness of the substrates would be readily adjustable to the desired hardness.

Examples of the aforementioned organic molybdenum compound to be contained in the lubricant may include a molybdenum-amine complex, a molybdenum-succinimide complex, a molybdenum salt of an organic acid, a molybdenum salt of an alcohol, molybdenum dialkyldithiocarbamate (Mo-DTC) or molybdenum dithiophosphate (Mo-DTP) and the like. A preferred form of an organic molybdenum compound according to the present invention is molybdenum dialkyldithiocarbamate (Mo-DTC) or molybdenum dithiophosphate (Mo-DTP).

According to the present invention, by using molybdenum dialkyldithiocarbamate (Mo-DTC) or molybdenum dithiophosphate (Mo-DTP) for the organic molybdenum compound, molybdenum disulfide (MoS₂) is produced at the sliding surfaces of the slide members depending on the sliding conditions, and this molybdenum disulfide is formed at the sliding surfaces as a solid lubricant film. Consequently, in addition to further suppressing chemical wear of the amorphous carbon film formed at the sliding surface of the slide member, it is also possible to further suppress wear of the slide members caused by mechanical contact between the sliding surfaces.

In particular, taking utility, costs, etc., into consideration, it is preferable that the organic molybdenum compound to be contained in the lubricant be molybdenum dialkyldithiocarbamate (Mo-DTC), and the structure of the alkyl group in the molecules would vary depending on the method of production. Specific examples of molybdenum dialkyldithiocarbamate include molybdenum sulfide dibutyldithiocarbamate, molybdenum sulfide dipentyldithiocarbamate, molybdenum sulfide dihexyldithiocarbamate, molybdenum sulfide diheptyldithiocarbamate, molybdenum sulfide dioctyldithiocarbamate, molybdenum sulfide dinonyldithiocarbamate, molybdenum sulfide didecyldithiocarbamate, molybdenum sulfide diundecyldithiocarbamate, molybdenum sulfide didodecyldithiocarbamate, molybdenum sulfide ditridecyldithiocarbamate and the like, and they may be used alone or by mixing two or more of them.

In addition, specific examples of molybdenum dithiophosphate (Mo-DTP) include molybdenum diisopropyl dithiophosphate, molybdenum diisobutyl dithiophosphate, molybdenum dipropyl dithiophosphate, molybdenum dibutyl dithiophosphate, molybdenum dipentyl dithiophosphate, molybdenum dihexyl dithiophosphate, molybdenum diheptyl dithiophosphate, molybdenum diphenyl dithiophosphate and the like, and they may be used alone or by mixing two or more of them.

In addition, the lubricant may be a lubricating oil. The base oil may be a mineral oil, a synthetic oil or the like, additives, and is not limited in particular as long as it contains the aforementioned organic molybdenum compound. In addition, as deemed appropriate, there may be added to such a lubricant an antioxidant, an antiwear agent, an extreme-pressure agent, a friction modifier, a metal deactivator, a detergent, a dispersant, a viscosity index improver, a corrosion inhibitor, an anti-foam agent and the like. In addition, instead of a lubricating oil, the lubricant may also be grease in which a thickener is further dispersed in a base oil containing an organic molybdenum compound.

Further, it is preferable that a slide structure according to the present invention be provided with a supplying mechanism that supplies the lubricant to the sliding surface. The supplying mechanism may be a lubrication mechanism by application, a mist lubrication mechanism, an oil bath lubrication mechanism by means of an oil bath, and the like, and is not limited in particular as long as a lubricant can be supplied stably between the slide members during sliding.

### ADVANTAGEOUS EFFECTS OF THE INVENTION

According to the present invention, even in cases where a lubricant containing an organic molybdenum compound is used on an amorphous carbon film, it is possible to produce a friction coefficient reducing effect by the organic molybdenum compound, while also reliably suppressing wear of the amorphous carbon film caused by chemical reactions between the amorphous carbon film and the organic molybdenum compound.

### BRIEF DESCRIPTION OF THE DRAWINGS

Figure 1 is a conceptual diagram of a slide structure according to the present embodiment.
Figure 2 is a schematic view of a friction and wear test according to the present example.
Figure 3 is a diagram showing the relationship between depth of wear and friction coefficient for slide structures according to working examples and Comparative Examples 1 and 2.
Figure 4 is a conceptual diagram of a slide structure according to the present invention.
Figure 5 is a diagram illustrating the decomposition of an amorphous carbon film.

### EXPLANATION OF REFERENCE

1: slide structure, 20: first slide member (one slide member), 20A: block sample, 21,21A: substrate, 22,22A: amorphous carbon film, 23: sliding surface, 30: second slide member (other slide member), 30A: ring sample, 31,31A: substrate, 32,32A: hard film, 33: sliding surface, 40: lubricant, 41: molybdenum dialkyldithiocarbamate (Mo-DTC)

### BEST MODE FOR CARRYING OUT THE INVENTION

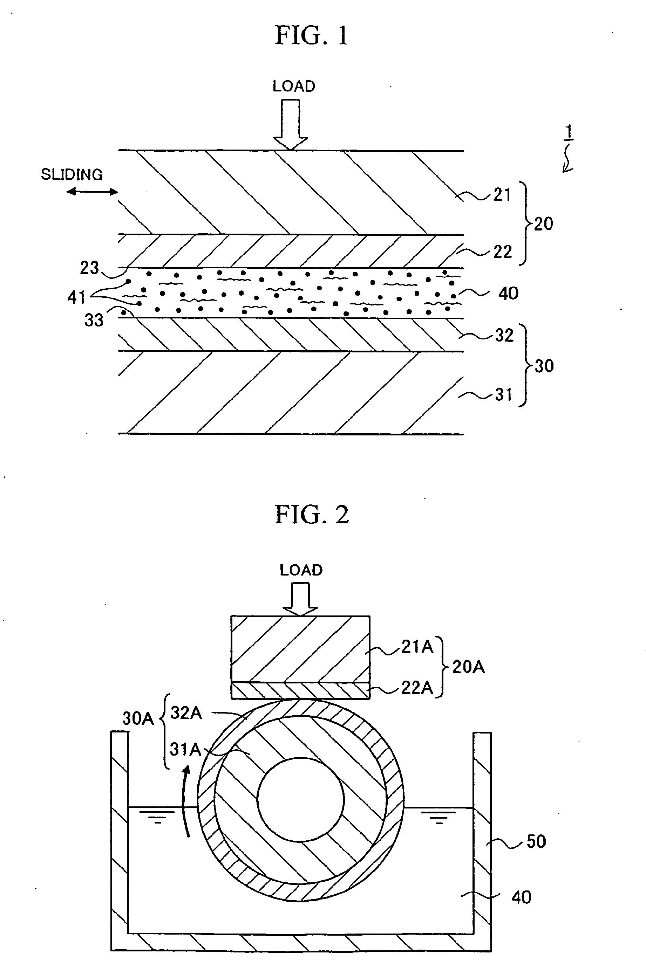

An embodiment of a slide structure according to the present invention is described below with reference to the drawings. Figure 1 is a schematic view of a slide structure according to the present invention.

As shown in Figure 1, a slide structure 1 according to the present invention comprises, as a pair of slide members that slide relative to each other, a first slide member (one slide member) 20 and a second slide member (other slide member) 30, and a lubricant 40 is supplied between the first slide member 20 and the second slide member 30.

The first slide member 20 has an amorphous carbon film 22 formed at, of the surfaces of a substrate 21 comprising a steel-based material or the like, a sliding surface 23 that slides relative to the second slide member 30. In addition, the first slide member 20 is so configured as to be slidable relative to the second slide member 30 while pressing a sliding surface 33 of the second slide member 30 with a predetermined load. It is noted that the first slide member 20 may be fabricated by polishing to a predetermined surface roughness the surface on which the amorphous carbon film 22 is to be formed, and thereafter forming on this surface the amorphous carbon film by, for example, a chemical vapor deposition (CVD) method or the like.

The second slide member 30 has a hard film 32 that does not contain the oxygen element formed at, of the surfaces of a substrate 31 comprising a steel-based material, a sliding surface 33 that slides relative to the first slide member 20. The hard film 32 is a film that has a hardness that is comparable to or greater than the surface hardness of the substrate 31 and should preferably be a ceramic film comprising a carbide compound such as titanium carbide (TiC) or the like. In addition, it is also possible to fabricate the second slide member 30 by forming the hard film by a method similar to the first slide member 20.

The lubricant 40 is supplied to the sliding surfaces 23, 33 at which the first slide member 20 and second slide member 30 slide by a predetermined supplying means (not shown) such as an oiling device or the like, and contains at least molybdenum dialkyldithiocarbamate (Mo-DTC) 41 as an organic molybdenum compound in a base oil.

According to the slide structure 1 thus configured, although it had hitherto been the case that Mo-DTC, which is an organic molybdenum compound, would react with the oxygen element contained in the sliding surface of the second slide member to produce molybdenum trioxide (MoO₃), by virtue of the fact that the hard film 32 that does not contain the oxygen element is formed at the sliding surface 33 of the second slide member 30, molybdenum trioxide originating from the oxygen element in the sliding surface is not produced even in cases where the sliding surfaces produce heat due to frictional heat and the like. Consequently, since decomposition of the amorphous carbon film 22 is not accelerated by chemical reactions induced by molybdenum trioxide, wear of the amorphous carbon film 22 formed at the sliding surface 23 of the first slide member 20 is suppressed.

Further, since, from the Mo-DTC contained in the lubricant 40 and depending on sliding conditions, molybdenum disulfide (MoS₂) is produced between the sliding surfaces of the first slide member 20 and the second slide member 30 that slide relative to each other and this molybdenum disulfide serves as a solid lubricant, it is effective in reducing and stabilizing the friction coefficient of these slide members.

### EXAMPLES

The present embodiment according to the present invention is described below through examples.

### [Example]

### (Slide Structure)

A block sample 20A such as that shown in Figure 2 was prepared as a first slide member (one slide member) of a pair of slide members, a ring sample 30A was prepared as a second slide member (other slide member) that slides relative thereto, and the lubricant indicated below was prepared as the lubricant 40 to be supplied between the block sample 20A and the ring sample 30A. Details of each are presented below.

### <Block Sample>

As shown in Figure 2, as a substrate 21A on which an amorphous carbon film 22A is to be formed, a substrate comprising a stainless steel (SUS440C: JIS standard) that is 15.7 mm × 10.0 mm × 6.3 mm and whose surface roughness of the sliding surface is mean line average roughness Ra 0.02 µm was produced. Subsequently, the film (amorphous carbon film) 22A comprising an amorphous carbon material was formed by CVD on the 15.7 mm × 6.3 mm sliding surface of this substrate 21A so as to be 1 µm in thickness, and the block sample 20A was thus produced.

### <Ring Sample>

As shown in Figure 2, as a substrate 31A on which a hard film 32A is to be formed, a substrate comprising a bearing steel (material: SAE4620) whose diameter is 35.0 mm, thickness is 8.7 mm, and surface roughness of the circumferential surface is mean line average roughness Ra 0.02 µm was produced. Subsequently, the hard film 32A comprising titanium carbide was formed by CVD on the circumferential surface of this substrate 31A so as to be 2 µm in thickness, and the ring sample 30A was thus produced.

### <Lubricant>

As the lubricant (lubricating oil) 40, a commercially available engine oil that contains in a base oil (SAE viscosity grade 5W-30) at least molybdenum dialkyldithiocarbamate (Mo-DTC) was prepared. It is noted that there are further added to this engine oil, as additives, an extreme-pressure agent (Zn-DTP or the like), a detergent (Ca sulfonate or the like), a dispersant, a viscosity index improver, an antioxidant, and the like.

### <Friction and Wear Test>

As shown in Figure 2, the block sample 20A, the ring sample 30A and the lubricant 40 described above were combined, and friction and wear tests (block-on-ring tests: LFW tests) were conducted. Specifically, the lubricant 40 was poured into an oil bath 50 so that the ring sample 30A would be partly immersed in the lubricant 40. The ring sample 30A was so rotated that the circumferential speed would be 0.6 m/s while maintaining the oil temperature at 80°C to form an oil film on the circumferential surface (sliding surface) of the ring sample 30A. 30-minute continuous tests were conducted by bringing the block sample 20A into contact with the circumferential surface of the ring sample 30A, on which the oil film was formed, while applying a load of 300 N.

At this point, the rotational resistance (sliding resistance) acting on the ring sample 30A was detected with a load cell mounted on the device to measure the friction coefficient, and the depth of wear of the block samples after the tests were completed was measured. The results thereof are shown in Figure 3.

### [Comparative Example 1]

A block sample, a ring sample and a lubricant were prepared as was done in the working example. What differs from the working example is that a base oil to which no additives such as Mo-DTC and the like were added was used for the lubricant. Then, under the same conditions as those of the working example, friction and wear tests were conducted. The results thereof are shown in Figure 3.

### [Comparative Example 2]

A block sample, a ring sample and a lubricant were prepared as was done in the working example. What differs from the working example is that a hard film comprising titanium carbide was not formed at the sliding surface of the ring sample. Then, under the same conditions as those of the working example, friction and wear tests were conducted. The results thereof are shown in Figure 3.

### [Results]

As shown in Figure 3, the depth of wear values of the block samples of the working example were smaller as compared to Comparative Example 2 (■ in the figure), and the friction coefficient values of the slide structures of the working example were smaller as compared to Comparative Example 1 (◆ in the figure).

### [Discussion]

It is speculated that the reason the depth of wear values were smaller in the working example than in Comparative Example 2 as shown in Results is that a hard film of titanium carbide (a hard film that does not contain the oxygen element) was formed at the circumferential surface (sliding surface) of the ring sample of the working example.

In other words, in the case of Comparative Example 2, since a hard film of titanium carbide is not formed at the circumferential surface of the ring sample, the circumferential surface of the ring sample comprises a steel basis material, which is the substrate, and as confirmed by an EPMA and the like, there is present at this circumferential surface an oxide of Fe₂O₃. Further, it is speculated that the oxygen element of this oxide and the molybdenum element of the Mo-DTC reacted under high temperature conditions caused by frictional heat during sliding to produce molybdenum trioxide (MoO₃). It is speculated that, consequently, the molybdenum trioxide attacked the carbon in the amorphous carbon film formed at the sliding surface of the block sample, thereby accelerating decomposition of the amorphous carbon film, and causing the depth of wear of the block sample to become greater.

Further, it is speculated that the reason the friction coefficients were lower in the working example than in Comparative Example 1 is that because the lubricant in Comparative Example 1 does not contain Mo-DTC, there were no friction reducing effects brought about by Mo-DTC itself and there were no lubricating effects of molybdenum disulfide (MoS₂) that is produced during sliding.

It is thus speculated that the slide structures according to the working example were able to reliably suppress wear of the amorphous carbon film due to chemical reactions between the amorphous carbon film and Mo-DTC, while at the same time exhibiting friction coefficient reducing effects by Mo-DTC.

While an embodiment of the present invention and examples according to that embodiment have been described in detail above, the present invention is by no means limited to the embodiment and examples discussed above, and various design modifications may be made without departing from the invention as defined in the claims.

### INDUSTRIAL APPLICABILITY

It is preferable that a slide structure according to the present invention be applied in environments where sliding is frequent, and wear resistance and low friction are called for, such as sliding portions of an engine combining a piston ring and a cylinder, sliding portions of a cam lifter combining a cam and a cam follower, and the like.

## Claims

1. A slide structure (1) comprising at least:
a pair of slide members (10, 30) arranged to slide relative to each other, in which an amorphous carbon film (22) is formed at a sliding surface of one slide member of the pair of slide members; and
a lubricant (40) that is present between the pair of slide members and that contains at least an organic molybdenum compound,
**characterized in that**:
a ceramic hard film (32) comprising a nitride compound or a carbide compound that does not contain the element oxygen is formed at a sliding surface of the other slide member,
the surface hardness of the amorphous carbon film of the one slide member falls within the range of Hv1000 to Hv4000, and
the film thickness of the amorphous carbon film of the one slide member is 0.1 µm or greater.

2. The slide structure according to claim 1, wherein the carbide compound is titanium carbide.

3. The slide structure according to claim 1 or 2, wherein the organic molybdenum compound is molybdenum dialkyldithiocarbamate (Mo-DTC) or molybdenum dithiophosphate (Mo-DTP).

## Patentansprüche

1. Gleitstruktur (1), wenigstens umfassend:
ein Paar Gleitelemente (10, 30), die so angeordnet sind, dass sie relativ zueinander gleiten, wobei an einer Gleitfläche des einen Gleitelements des Gleitelementepaars eine amorphe Kohlenstoffschicht (22) gebildet ist; und
ein Schmiermittel (40), das sich zwischen dem Paar von Gleitelementen befindet und das wenigstens eine organische Molybdänverbindung enthält,
**dadurch gekennzeichnet, dass**:
an der Gleitfläche des anderen Gleitelements ein keramischer Hartfilm (32) gebildet ist, der eine Nitridverbindung oder eine Carbidverbindung umfasst, die das Element Sauerstoff nicht enthält,
die Oberflächenhärte der amorphen Kohlenstoffschicht des einen Gleitelements in den Bereich von Hv1000 bis Hv4000 fällt, und
die Schichtdicke der amorphen Kohlenstoffschicht des einen Gleitelements 0,1 µm oder mehr beträgt.

2. Gleitstruktur nach Anspruch 1, wobei die Carbidverbindung Titancarbid ist.

3. Gleitstruktur nach Anspruch 1 oder 2, wobei die organische Molybdänverbindung Molybdändialkylthiocarbamat (Mo-DTC) oder Molybdändithiophosphat (Mo-DTP) ist.

## Revendications

1. Structure coulissante (1) comprenant au moins :
une paire d'éléments coulissants (10, 30) disposés pour coulisser l'un par rapport à l'autre, où un film de carbone amorphe (22) est formé au niveau d'une surface de coulissement d'un élément coulissant de la paire d'éléments coulissants ; et
un lubrifiant (40) qui est présent entre la paire d'éléments coulissants et qui contient au moins un composé organique du molybdène,
**caractérisée en ce que** :
un film dur céramique (32) comprenant un composé nitrure ou un composé carbure qui ne contient pas l'élément oxygène est formé au niveau d'une surface de coulissement de l'autre élément coulissant,
la dureté de surface du film de carbone amorphe du premier élément coulissant est située dans la plage de Hv1000 à Hv4000, et
l'épaisseur de film du film de carbone amorphe du premier élément coulissant est 0,1 µm ou plus.

2. Structure coulissante selon la revendication 1 où le composé carbure est le carbure de titane.

3. Structure coulissante selon la revendication 1 ou 2 où le composé organique du molybdène est un dialkyldithiocarbamate de molybdène (Mo-DTC) ou le dithiophosphate de molybdène (Mo-DTP).
